# FASCICULE DE BREVET EUROPEEN

(11) **EP 0 462 874 B1**
(45) Date de publication et mention de la délivrance du brevet: **01.09.1993**
(21) Numéro de dépôt: 91401588.8
(22) Date de dépôt: 14.06.1991
(51) Int. Cl.: B64C 25/58, F16F 9/06

(54) **Amortisseur d'avion**
Stossdämpfer eines Flugzeuges
Aircraft shock absorber

(30) Priorité: 18.06.1990 FR 9007574
(43) Date de publication de la demande: 27.12.1991
(73) Titulaire: MESSIER BUGATTI, F-78140 Velizy Villacoublay (FR)
(72) Inventeur: Martin, Pascal, F-91650 Breuillet (FR)
(74) Mandataire: Fruchard, Guy

(56) Documents cités:
- FR-A- 954 081
- FR-A- 1 239 315
- FR-A- 2 624 938

## Description

La présente invention concerne un amortisseur d'avion.

On sait que pour les amortisseurs d'avion il est souhaitable de pouvoir régler le degré de laminage, en particulier le laminage en détente du fluide hydraulique contenu dans l'amortisseur en fonction des conditions dans lesquelles on utilise l'atterisseur sur lequel est monté l'amortisseur. Il est également connu que lorsque les caractéristiques de l'amortisseur doivent être modifiées en cours d'utilisation, on utilise généralement une source extérieure de fluide sous pression agissant sur un piston mobile à l'intérieur de l'amortisseur.

Le document FR-A-2 624 938 montre un amortisseur selon le préambule de la revendication 1.

L'invention concerne un amortisseur d'avion comportant un caisson, une tige plongeuse fixée au caisson et s'étendant à l'intérieur de celui-ci, une tige coulissante montée pour coulisser dans le caisson et associée à la tige plongeuse pour communiquer avec l'intérieur de celle-ci par des orifices de laminage, la tige coulissante et la tige plongeuse étant remplies d'un liquide hydraulique surmonté d'un gaz sous pression, dans lequel on prévoit des orifices de court-circuit entre la tige plongeuse et la tige coulissante, des moyens pour commander une ouverture ou une fermeture des orifices de laminage et des orifices de court-circuit et des moyens pour pomper le liquide hydraulique dans la tige coulissante et l'envoyer dans la tige plongeuse.

Ainsi, par un déplacement de liquide hydraulique entre la tige coulissante et la tige plongeuse et après avoir fermé les orifices de laminage et les orifices de court-circuit, on accumule une énergie qui est ensuite disponible en fonction des circonstances d'utilisation de l'avion sur lequel l'amortisseur est monté.

Selon une version avantageuse de l'invention, les orifices de laminage et de court-circuit sont portés par un élément de paroi cylindrique de la tige plongeuse et les moyens pour commander une ouverture ou une fermeture des orifices de laminage et des orifices de court-circuit comprennent un tiroir relié à une tige de commande pour coulisser dans l'élément de paroi cylindrique et comportant des orifices correspondants aux orifices de laminage et de court-circuit disposés pour ne pas être simultanément en regard des orifices de laminage et de court-circuit de la tige plongeuse. Ainsi, en agissant sur un seul organe de commande, on contrôle l'ouverture et la fermeture de l'ensemble des orifices.

Selon un autre aspect avantageux de l'invention, la tige de commande est une tige creuse servant de liaison entre la tige coulissante et les moyens pour pomper le liquide hydraulique.

Selon un autre aspect avantageux de l'invention, la tige de commande est reliée à un piston de commande disposé dans un boîtier de commande à une extrémité supérieure de la tige plongeuse, de préférence le piston de commande est sollicité sur une face par un organe élastique vers une position dans laquelle les orifices de laminage sont ouverts et les orifices de court-circuit sont fermés, et sur une face opposée par un liquide de commande.

Selon un mode de réalisation préféré de l'invention, le boîtier de commande comporte un orifice de fuite calibré pour le liquide de commande, cet orifice étant disposé pour que le piston de commande provoque la fermeture des orifices de laminage et de court-circuit lorsque le piston de commande affleure l'orifice de fuite calibré.

D'autres caractéristiques et avantages de l'invention apparaîtront encore à la lecture de la description qui suit d'un mode de réalisation particulier non limitatif de l'invention en liaison avec les figures ci-jointes parmi lesquelles :
- la figure 1 est une vue schématique en coupe axiale d'un amortisseur selon l'invention en position d'utilisation normale,
- la figure 2 est une vue agrandie de l'encadré de la figure 1,
- la figure 3 est une vue schématique en coupe axiale de l'amortisseur selon l'invention, dans une position de fermeture des orifices de laminage et de court-circuit,
- la figure 4 est une vue agrandie de l'encadré de la figure 3,
- la figure 5 est une vue en coupe axiale schématique de l'amortisseur selon l'invention dans la position d'ouverture des orifices de court-circuit,
- la figure 6 est une vue agrandie de l'encadré de la figure 5.

En référence aux figures, l'amortisseur selon l'invention comporte un caisson cylindrique 1 dans lequel est fixée une tige plongeuse cylindrique 2 montée coaxialement au caisson 1 à l'intérieur de celui-ci. Une tige coulissante 3 est montée pour coulisser à l'intérieur du caisson 1 autour de la tige plongeuse 2, la tige coulissante 3 étant associée de façon étanche avec la surface externe de la tige plongeuse 2. Une plaque transversale 4 est fixée à la partie intérieure de la tige plongeuse 2 et maintenue légèrement écartée de celle-ci par des cales d'écartement 5. La plaque transversale 4 à son bord périphérique associé de façon étanche avec la surface interne de la tige coulissante 3 et délimite ainsi une chambre haute 6 et une chambre basse 7 à l'intérieur de la tige coulissante, la chambre haute et la chambre basse étant reliées l'une à l'autre par des clapets de laminage en détente 8 montés sur la plaque transversale 4. La plaque transversale 4 est également traversée par un tiroir cylindrique creux 9 monté pour coulisser dans un élément de paroi cylindrique 10 s'étendant à la partie inférieure de la tige plongeuse 2 coaxialement à celle-ci. La partie de paroi cylindrique 10 de la tige plongeuse comporte des orifices de laminage 11 et des orifices de court-circuit 12.

Le tiroir cylindrique 9 comporte des orifices 13 correspondant aux orifices de laminage 11 de la tige plongeuse 2 et des orifices 14 qui correspondent d'une part, aux orifices de court-circuit 12 de la tige plongeuse et d'autre part à l'espace entre l'extrémité inférieure de la tige plongeuse et la plaque transversale 4.

Le tiroir 9 est relié par une tige de commande creuse 15 à un piston de commande 16 disposé dans un boîtier de commande 17 à la partie supérieure de la tige plongeuse 2. Le piston de commande 16 est sollicité sur une face par un ressort hélicoïdal 18 qui tend à ramener le piston de commande vers le haut contre une butée 19 à l'intérieur du boîtier de commande 17. Sur la face opposée au ressort 18, le piston de commande 16 est sollicité par un liquide de commande introduit dans le boîtier de commande par une canalisation d'admission 20. En un point intermédiaire de la paroi latérale du boîtier de commande 17, celui-ci comporte un orifice calibré 21 relié à une canalisation d'échappement 22 du liquide de commande.

L'extrémité supérieure de la tige de commande 15 débouche à l'extérieur du caisson 1 et est reliée par une canalisation 23 à l'orifice d'admission d'une pompe 24 dont l'orifice d'échappement est relié par une canalisation 25 à la partie supérieure de la tige plongeuse 2.

Du liquide hydraulique est disposé dans la tige coulissante ainsi que dans la partie inférieure de la tige plongeuse 2 et est surmonté par un gaz sous pression.

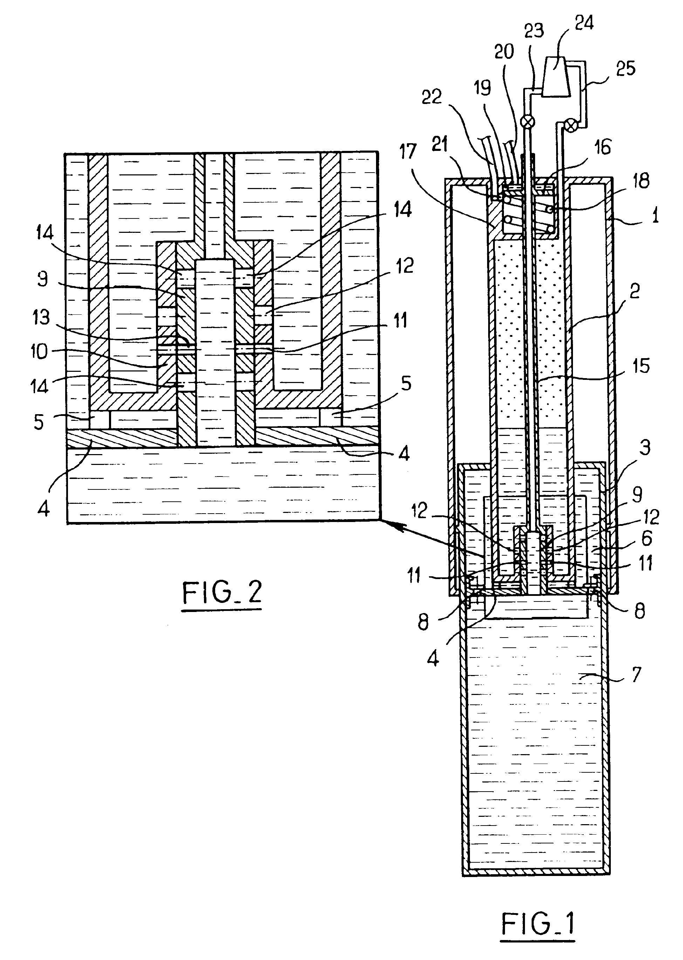

Le fonctionnement de l'amortisseur selon l'invention est le suivant : en position normale d'utilisation représentée sur les figures 1 et 2, aucun liquide de commande n'est envoyé au-dessus du piston de commande 16 qui est alors maintenu appliqué contre la butée 19 par le ressort 18. Dans cette position, les orifices 13 du tiroir 9 coïncident avec les orifices de laminage 11 de la tige plongeuse tandis que des orifices 14 du tiroir 9 sont décalés par rapport aux orifices de court-circuit 12 de la tige plongeuse et à l'espace séparant l'extrémité inférieure de la tige plongeuse et la plaque transversale 4. L'amortisseur fonctionne alors dans les conditions habituelles avec un laminage en détente par des clapets de laminage 8, et un laminage en compression et en détente par les orifices de laminage 11, 13.

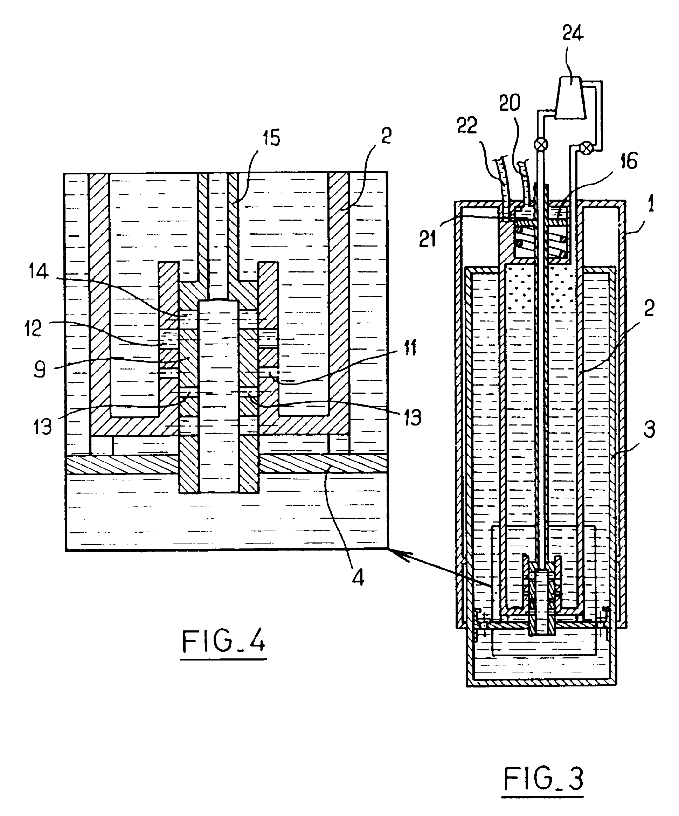

Lorsque l'on souhaite préparer l'amortisseur à des conditions de fonctionnement particulières, du fluide de commande est envoyé dans la canalisation 20 à une pression supérieure à la force exercée par le ressort 18 et selon un débit correspondant à la section de passage de l'orifice calibré 21. Le piston de commande 16 est alors repoussé vers le bas jusqu'à ce que sa face supérieure affleure l'orifice calibré 21. Dans cette position représentée sur la figure 3, le piston de commande 16 reste en équilibre stable tant que le débit du fluide de commande dans la canalisation 20 reste égal au débit de fuite dans l'orifice calibré 21. Pour cette position du piston de commande 16, le tiroir 9 est décalé par rapport à la position initiale de sorte que les orifices 13 du tiroir 9 (voir figure 4) ne coïncident plus avec les orifices de laminage 11 de la tige plongeuse 2 et les orifices 14 ne sont pas encore en regard des orifices de court-circuit 12. Dans cette position du tiroir 9 la liaison entre l'intérieur de la tige plongeuse 2 et l'intérieur de la tige coulissante 3 est interrompue et la mise en route de la pompe 24 permet d'effectuer un transfert de liquide hydraulique depuis la tige coulissante 3 vers l'intérieur de la tige plongeuse 2. Au fur et à mesure du pompage, la tige coulissante 3 se rétracte dans le caisson 1, comme représenté sur la figure 3, tandis que la pression du gaz comprimé augmente dans la tige plongeuse 2.

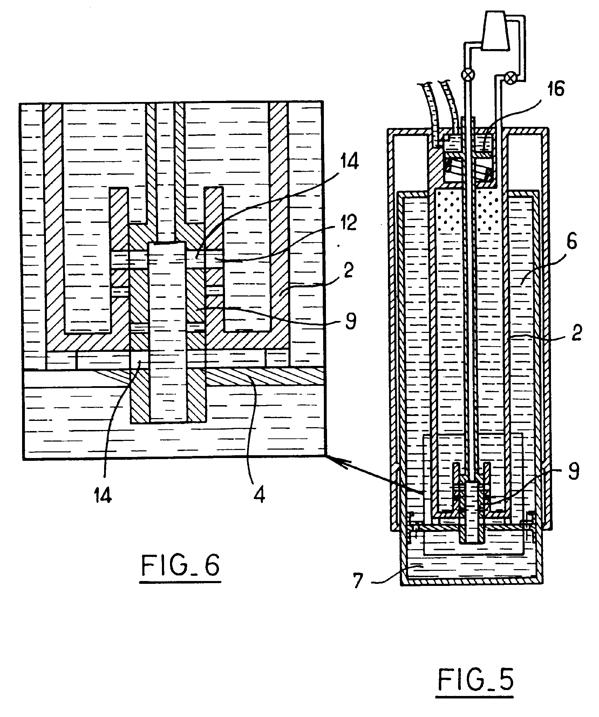

Lorsque l'on souhaite utiliser l'énergie ainsi accumulée, le débit du liquide de commande dans la canalisation 20 est augmenté ou l'orifie calibré 21 est fermé, de sorte que le piston de commande 16 est repoussé vers le bas dans la position représentée sur la figure 5. Dans cette position, le tiroir 9 prend lui-même la position représentée sur la figure 6 dans laquelle les orifices 14 du tiroir 9 coïncident,d'une part avec les orifices de court-circuit 12 de la tige plongeuse 2 et, d'autre part, avec l'intervalle entre l'extrémité inférieure de la tige plongeuse 2 et la plaque transversale 4. Le liquide hydraulique s'écoule alors pratiquement sans laminage depuis la tige plongeuse 2 et la chambre haute 6 de la tige coulissante vers la chambre basse 7 de la tige coulissante et l'amortisseur se détend donc rapidement. La pression du liquide de commande est alors abaissée et l'amortisseur revient dans des conditions de fonctionnement normal représenté sur les figures 1 et 2.

Bien entendu l'invention n'est pas limitée au mode de réalisation décrit et on peut y apporter des variantes de réalisation sans sortir du cadre de l'invention telle que revendiquée. En particulier, bien que l'amortisseur selon l'invention ait été illustré avec une tige coulissante associée à la tige plongeuse pour coulisser de façon étanche par rapport à la surface externe de celle-ci, on peut également réaliser l'invention avec une tige coulissante associée de façon étanche au niveau de la plaque transversale 4 seulement. Dans ce cas, les clapets de laminage 8 sont supprimés et la plaque transversale 4 est associée de façon étanche à l'extrémité inférieure de la tige plongeuse 2. La partie de tige coulissante comprise entre la plaque transversale 4 et l'extrémité supérieure de la tige coulissante est alors simplement remplie d'air à la pression atmosphérique. En fonctionnement normal, le laminage en détente est, dans ce cas, assuré seulement par les orifices de laminage 11 et 13.

On peut également commander la position du tiroir 9 par une tige de commande associée à un moteur électrique. On peut aussi utiliser une tige de commande pleine et prévoir une canalisation séparée pour le raccordement de la chambre basse 7 de la tige coulissante 3 à la pompe 24.

## Revendications

1. Amortisseur d'avion comportant un caisson (1), une tige plongeuse (2) fixée au caisson et s'étendant à l'intérieur de celui-ci, une tige coulissante (3) montée pour coulisser dans le caisson et associée à la tige plongeuse (2) pour communiquer avec l'intérieur de celle-ci par les orifices de laminage (11), la tige coulissante et la tige plongeuse étant remplies d'un liquide hydraulique surmonté d'un gaz sous pression, caractérisé en ce qu'il comporte des orifices de court-circuit (12) entre la tige plongeuse et la tige coulissante, des moyens pour commander une ouverture ou une fermeture des orifices de laminage et des orifices de court-circuit, et des moyens (24) pour pomper le liquide hydraulique dans la tige coulissante et l'envoyer dans la tige plongeuse.

2. Amortisseur selon la revendication 1 caractérisé en ce que les orifices de laminage et de court-circuit sont portés par un élément de paroi cylindrique (10) de la tige plongeuse (2), et en ce que les moyens pour commander une ouverture ou une fermeture des orifices de laminage comprennent un tiroir (9) relié à une tige de commande (15) pour coulisser dans l'élément de paroi cylindrique.

3. Amortisseur selon la revendication 2 caractérisé en ce que la tige de commande (15) est une tige creuse servant de liaison entre la tige coulissante (3) et les moyens (24) pour pomper le liquide hydraulique.

4. Amortisseur selon la revendication 2 ou la revendication 3 caractérisé en ce que la tige de commande est reliée à un piston de commande (16) disposé dans un boîtier de commande (17) à une extrémité supérieure de la tige plongeuse.

5. Amortisseur selon la revendication 4 caractérisé en ce que le piston de commande(16) est sollicité sur une face par un organe élastique vers une position dans laquelle les orifices de laminage sont ouverts et les orifices de court-circuit sont fermés, et sur une face opposée par un liquide de commande.

6. Amortisseur selon la revendication 5 caractérisé en ce que le boîtier de commande (17) comporte un orifice de fuite calibré (21) pour le liquide de commande, cet orifice de fuite étant disposé pour que le piston de commande provoque la fermeture des orifices de laminage et de court-circuit lorsque le piston de commande affleure l'orifice de fuite calibré.

## Patentansprüche

1. Stoßdämpfer eines Flugzeuges, umfassend ein Gehäuse (1), einen Tauchschaft (2), der an dem Gehäuse befestigt ist und sich innerhalb desselben erstreckt, eine Gleitstange (3), die für eine Gleitbewegung in dem Gehäuse angeordnet und dem Tauchschaft (2) zugeordnet ist, um mit dem Innenraum desselben über Strömungsöffnungen (11) zu kommunizieren, wobei die Gleitstange und der Tauchschaft mit einer Hydraulikflüssigkeit gefüllt sind, über der ein Druckgas liegt, **gekennzeichnet** durch Öffnungen (12) für eine Kurzschlußverbindung zwischen dem Tauchschaft und der Gleitstange, Mittel zum Steuern eines Öffnens oder Schließens der Strömungsöffnungen und der Kurzschlußöffnungen und Mittel (24), um die Hydraulikflüssigkeit in die Gleitstange zu pumpen und sie in den Tauchschaft zu fördern.

2. Stoßdämpfer nach Anspruch 1, dadurch **gekennzeichnet,** daß die Strömungsöffnungen und die Kurzschlußöffnungen an einem Zylinderwandelement (10) des Tauchschaftes (2) ausgebildet sind und daß die Mittel zum Steuern eines Öffnens oder eines Schließens der Strömungsöffnungen einen Schieber (9) umfassen, der mit einer Steuerstange (15) verbunden ist, so daß er in dem Zylinderwandelement gleiten kann.

3. Stoßdämpfer nach Anspruch 2, dadurch **gekennzeichnet,** daß die Steuerstange (15) eine hohle Stange ist, welche zur Verbindung zwischen der Gleitstange (3) und den Mitteln (24) zum Pumpen der Hydraulikflüssigkeit dient.

4. Stoßdämpfer nach Anspruch 2 oder 3, dadurch **gekennzeichnet,** daß die Steuerstange mit einem Steuerkolben (16) verbunden ist, der in einem Steuergehäuse (17) an einem oberen Ende des Tauchschaftes angeordnet ist.

5. Stoßdämpfer nach Anspruch 4, dadurch **gekennzeichnet,** daß der Steuerkolben (16) an einer Fläche durch ein elastisches Organ in eine Richtung vorgespannt ist, in der die Strömungsöffnungen geöffnet und die Kurzschlußöffnungen geschlossen sind, und an seiner entgegengesetzten Fläche durch eine Steuerflüssigkeit beaufschlagt wird.

6. Stoßdämpfer nach Anspruch 5, dadurch **gekennzeichnet,** daß das Steuergehäuse (17) eine geeichte Belüftungsöffnung (21) für die Steuerflüssigkeit hat, wobei die Belüftungsöffnung so angeordnet ist, daß der Steuerkolben das Schließen der Strömungsöffnungen und der Kurzschlußöffnungen bewirkt, wenn der Steuerkolben auf gleicher Höhe mit der geeichten Belüftungsöffnung liegt.

## Claims

1. An aircraft shock absorber including a strut (1), a dip rod (2) fixed to the strut and extending inside the strut, a sliding rod (3) mounted to slide inside the strut and associated with the dip rod (2) to communicate with the inside thereof via throttling orifices (11), the sliding rod and the dip rod being filled with a hydraulic liquid surmounted by a gas under pressure, the shock absorber being characterized in that it includes short-circuit orifices (12) between the dip rod and the sliding rod, means for opening or closing the throttling orifices and the short-circuit orifices, and means (24) for pumping hydraulic liquid from the sliding rod and into the dip rod.

2. A shock absorber according to claim 1, characterized in that the throttling orifices and the short-circuit orifices are carried by a cylindrical wall element (10) of the dip rod (2), and in that the means for opening and closing the throttling orifices comprise a slide (9) connected to a control rod (15) to slide inside the cylindrical wall portion.

3. A shock absorber according to claim 2, characterized in that the control rod (15) is a hollow rod providing a connection between the sliding rod (3) and the means (24) for pumping the hydraulic liquid.

4. A shock absorber according to claim 2 or claim 3, characterized in that the control rod is connected to a control piston (16) disposed inside a control box (17) at a top end of the dip rod.

5. A shock absorber according to claim 4, characterized in that the control piston (16) has a resilient member engaged with one face thereof urging it towards a position in which the throttling orifices are open and the short-circuit orifices are closed, and has a control liquid acting on an opposite face thereof.

6. A shock absorber according to claim 5, characterized in that the control box (17) includes a calibrated leak orifice (21) for the control liquid, said leak orifice being disposed so that the control piston causes the throttling orifices and the short-circuit orifices to be closed when the control piston is flush with the calibrated leak orifice.
